# EUROPEAN PATENT SPECIFICATION

(11) **EP 0 698 004 B1**
(45) Date of publication and mention of the grant of the patent: **08.10.1997**
(21) Application number: 94914462.0
(22) Date of filing: 05.05.1994
(51) Int. Cl.: C04B 41/86, C04B 41/89, C23D 5/04, C03C 17/04

(54) **PROCESS FOR ELECTROSTATICALLY APPLYING A FIRABLE MATERIAL**
VERFAHREN ZUM ELEKTROSTATISCHEN AUFTRAGEN EINES EINBRENNBAREN MATERIALS
PROCEDE POUR LE REVETEMENT ELECTROSTATIQUE D'UN MATERIAU A CUIR

(30) Priority: 06.05.1993 GB 9309295
(43) Date of publication of application: 28.02.1996
(73) Proprietor: British Ceramic Research Limited, Stoke-on-Trent Staffordshire ST4 7LQ (GB)
(72) Inventor: BRETT, Robert Dennis, British Ceramic Res. Ltd., Stoke-on-Trent, StaffordshiresST4 7LQ (GB); WITHINGTON, Steven Charles, Brit. Ceramic Res.Ltd., Stoke-on-Trent, Staffordshire ST4 7LQ (GB); SHINGLER, David, British Ceramic Research Ltd., Stoke-on-Trent, Staffordshire ST4 7LQ (GB); CROOKS, Mark Edward, British Ceramic Research Ltd., Stoke-on-Trent, Staffordshire ST4 7LQ (GB)
(74) Representative: Sales, Robert Reginald
(86) International application number: GB9400965
(87) International publication number: WO9426679

(56) References cited:
- EP-A- 0 359 564
- EP-A- 0 504 683
- EP-A- 0 599 106
- DE-A- 2 440 964
- DE-A- 2 747 858
- DE-B- 1 027 581
- FR-A- 991 398
- GB-A- 1 198 462

## Description

This invention concerns a method of applying a layer of a firable material on to a firable article and particularly but not exclusively to applying glaze.

Traditionally, glazing of ceramic tableware involves a wet process. Glaze is in the form of a water borne suspension of ground glaze, along with 5-10% china clay suspending agent, and other additives such as binders, stabilisers, and colouring matter. The glaze is applied by a process of manual or semi-automatic dipping of ware, or by wet spraying of glaze onto ware. The process as a whole requires a high degree of monitoring as regards rheology, thixotropy, and fluidity of glaze 'slop'. Dipping and sprayed glazes obviously require rather different characteristics. Considerable effort is put into recovering spent glazes. For examples the overspray of the relatively inefficient wet glaze spray may be recovered using a waterfall. This recovery process necessarily involves the discharge of effluent waters which may require considerable and expensive water treatment to remove potentially toxic metals such as lead or zinc.

The tableware is subsequently fired but before firing handleability of the tableware is required. This feature is necessary as a number of manual operations such as foot cleaning may be necessary or the ware may be stored for a short period such as a few days to fit into a firing programme before being moved into a kiln. It is essential therefore that no areas of glaze are rubbed or knocked off prior to firing.

Attempts have been made to apply glaze to ceramic items by electrostatic dry powder application. In such application charged particles are usually sprayed onto an earthed article and are held thereon by the charge. However, this has not proved successful for tableware as it has been too easy to knock glaze off the ware or the applied powder has lost its charge and thus the glaze drops off prior to firing. Another problem which has been encountered when trying to use electrostatic spraying for ceramic ware is that due to the nature of the materials involved problems have been encountered in ensuring that the glaze is attracted to the ware.

DE2440964 discloses a particulate firable material for electrostatic powder application. The powder comprises a material which promotes adhesion to the substrate and which will burn off during subsequent firing. Preferred examples are: Polyethylene, polystyrene, polyacrylates and other thermoplastic resins. To fix the powder, the coated substrate is heated to a temperature exceeding the melting or softening temperature of the adhesion-promoting additive. The particulate material further comprises a silane.

EP0504683 discloses a ceramic microgranulate for electrostatic dry powder application onto ceramic, firable substrates. The microgranulate comprises a specific curable polymethylhydrogensiloxane to improve the adherence to the substrate. The adherence of the powder in accordance with this specification allows handling and transportation of the coated article before firing without difficulties.

According to the present invention there is provided a method of applying a layer of a firable particulate material to a firable article, the method comprising applying the particulate material and an adherable material by spraying onto the article by electrostatic dry powder application, such that the particulate material is retained on the article by the adherable material until subsequent firing of the material and article has taken place, the adherable material adhering onto the article by solidifying thereon from a molten state, characterised in that the article is heated prior to application of the firable material such that the adherable material melts upon contact with the heated article, and solidifies thereon during subsequent cooling.

The adherable material is preferably of a type which will burn off during firing.

The adherable material is preferably mixed with the firable material prior to application.

The adherable material preferably comprises a thermoplastic material and may comprise polyethylene.

The adherable material may be mixed with the firable material at elevated temperatures such that the adherable material melts during mixing.

The resistivity of the firable material may be increased prior to application. The resistivity may be increased by mixing the firable material with a highly resistive material which may comprise a liquid curable siloxane.

The highly resistive material is preferably of a type which will burn off during firing. Alternatively, the highly resistive material may leave a residue after firing.

An electrically conductive layer may be applied to the article prior to electrostatic application.

The conductive layer may comprise an aqueous solution of a salt.

The present invention also provides a method of applying glaze to a ceramic article using a method according to any of the preceding nine paragraphs.

Embodiments of the present invention will now be described by way of example only.

The preparation of a glaze powder according to the present invention will now be described. 1 kg of dry Blythe 72C5 leadless glaze frit and 5g of Wacker Chemicals' Polymethyl Hydrogen siloxane (PMHS) were placed in a ball mill with 3 kg mixed alumina grinding media. The mill was then placed on rollers set to turn the mill at 120 rpm for 9 hours. The resulting powder was then separated from the grinding media and placed in a drying oven at 200°C for 1 hour to cure the PMHS. The powder was then cooled and sieved through a 200 micron aperture mesh and any particles retained on the sieve were discarded.

The remaining powder was weighed and placed in a small Z-Blade mixer which was then heated to 160°C. A 15% by weight addition of 70% BDH 'Paraffin Wax' (98°C) and 30% shell low density polyethylene was calculated and weighed out. This addition was then placed into the mixer and the blades switched on. After 5 minutes mixing the temperature was turned down to 140°C and mixing continued. After a further 20 minutes the mixture had formed a single 'doughlike' mass. At this point the blades were switched off and the mixture cooled to 80°C. Once cooled the blades were switched on and the mixture 'self granulated'. When the mixture ceased to granulate further it was removed from the mixer and allowed to cool to room temperature.

The granulated mixture was sieved through a 4 mm mesh sieve and any pieces retained broken down by hand in a mortar and pestle till all passed. The granulated mixture was then loaded into a Christison Mixer Mill 2000 and ground for 5 minutes. The ground mixture was then silica was made. This was mixed in and the powder sieved through a 200 micron mesh with any particles retained being reground until all passed. The resulting powder was weighed and a 0.2% by weight addition of fumed resieved through the 200 micron mesh to evenly distribute the fumed silica.

The glazed powder thus formed can be stored until required and then applied to an item of tableware by electrostatic spraying. In this process a large potential difference of typically 60 to 100 kV is set up between the tip of an electrostatic gun and the workpiece. The glaze powder passes through this zone fed by low pressure air and becomes charged, typically by picking up electrons. The sprayed material is attracted to the earthed workpiece where it settles and is held by induced electrostatic charge, or by the action of the adherable polyethylene, or both.

The ware is heated such that the thermoplastic (polyethylene) melts on the ware and upon subsequent cooling adheres to the ware holding the glazed material thereon until firing. This permits handling of the ware for manual operation such as foot cleaning and also prevents the glaze from being knocked off the ware during for example loading onto kiln furniture. The siloxane mixed with the glaze increases the electrical resistivity thereof permitting good electrostatic application onto the ware. Without this increased resistivity the usual low resistivity of the glaze which is caused by the mobile cations on the glaze particle surface (sodium, calcium, potassium etc.) rapidly disperse the applied charge. This would make for very poor electrostatic spraying of the ware and also a high possibility of any glaze which was attracted to the ware falling off before being held thereon by the thermoplastic. The thermoplastic is of course burnt off during the firing.

The siloxane adsorbs onto the glaze particles thereby producing an at least partial coating. The siloxane helps the thermoplastic to key on to the glaze particles.

Usual constituents for glaze powders including a thermoplastic material are as follows:

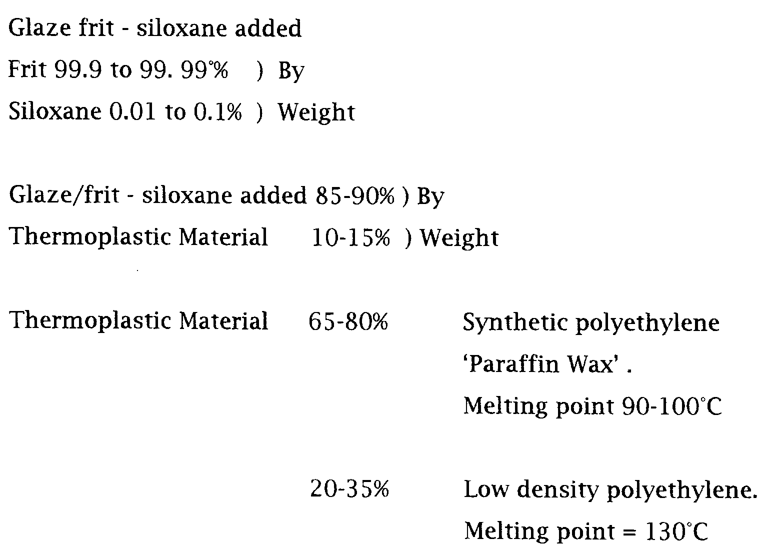

There is thus described a method of applying glaze to tableware, and a glaze to be applied in this manner, which provide considerable advantages. The invention permits dry electrostatic spraying to be used for glaze application. This type of spraying has three main advantages. The first of these is wrap around i.e. that the charged powder coats the ware from all angles and not just from the direction it is sprayed. Secondly in certain conditions the coating formed is self-limiting in that the charge on the powder builds up as the powder layer increases until a point as reached where further incoming powder is repelled from the workpiece. Thirdly, electrostatic spraying also provides a very even layer, and a very smooth surface appearance is achievable if required subsequent to firing.

As well as providing increased resistivity to aid electrostatic attraction the coating renders the glaze powders hydrophobic. This has an additional bonus in the second step, the mixing in the Z-Blade mixer, of preparation of glaze powders.

Different ceramic bodies have different conductivities and thus require different glaze compositions and spraying conditions. For bodies which have low conductivity e.g. bone china bisque, it is important to use the thermoplastic and to heat the ware such that the thermoplastic provides adhesion onto the ware at an early moment. In view of the low conductivity of some vitreous bodies it may be necessary to firstly apply a conductive layer onto the ware's surface such as an aqueous solution of a soluble salt.

Additional benefits of the thermoplastic system are the excellent handleability which can give protection to delicate underglaze line decorations. Furthermore, such a glaze can be used to cover unfired underglazed decorations. These generally include an organic binder which tends to cause rejection with conventional water based glaze systems. This is not a problem with the dry thermoplastic coated glazes.

The thermoplastic glaze burns out cleanly giving combustion products of carbon dioxide and water. Such a glaze is of low allergenic character and are generally non-toxic. The method of glaze application according to the present invention is environmentally much more friendly than conventional methods because the overspray being a powder is more easily recovered and is almost totally recovered. Accordingly, the problems with reclaiming spent glaze and also avoiding toxic effluent are avoided.

Various modifications may be made without departing from the scope of the invention. For example different materials may be used other than those outlined above. Material other than siloxane, or a liquid glycol could be used to increase resistivity. Different adhesive materials could be used. Furthermore, different processes may be used to prepare the dry glaze powders.

It is to be realised that the present invention is usable for applying materials to firable articles other than glazes to tableware. For example, the invention may be used to apply frits or colours to a wide range of materials. Furthermore, layers can be applied to electrical and electronic components or a wide range of other firable substrates such as glass.

## Claims

1. A method of applying a layer of a firable particulate material to a firable article, the method comprising applying the particulate material and an adherable material by spraying onto the article by electrostatic dry powder application, such that the particulate material is retained on the article by the adherable material until subsequent firing of the material and article has taken place, the adherable material adhering onto the article by solidifying thereon from a molten state, characterised in that the article is heated prior to application of the firable material such that the adherable material melts upon contact with the heated article, and solidifies thereon during subsequent cooling.

2. A method according to Claim 1, characterised in that the adherable material is of a type which will burn off during firing.

3. A method according to Claims 1 or 2, characterised in that the adherable material is mixed with the firable material prior to application.

4. A method according to any of the preceding Claims, characterised in that the adherable material comprises a thermoplastic material.

5. A method according to Claim 4, characterised in that the adherable material comprises polyethylene.

6. A method according to any of the preceding claims, characterised in that the adherable material is mixed with the firable material at elevated temperatures such that the adherable material melts during mixing.

7. A method according to any of the preceding Claims, characterised in that the resistivity of the firable material is increased prior to application.

8. A method according to Claim 7, characterised in that the resistivity is increased by mixing the firable material with a highly resistive material.

9. A method according to Claim 8, characterised in that the highly resistive material comprises a liquid curable siloxane.

10. A method according to Claims 8 or 9, characterised in that the highly resistive material is of a type which will burn off during firing.

11. A method according to Claims 8 or 9, characterised in that the highly resistive material leaves a residue after firing.

12. A method according to any of Claims 1 to 6, characterised in that an electrically conductive layer is applied to the article prior to electrostatic application.

13. A method according to Claim 12, characterised in that the conductive layer comprises an aquaeous solution of a salt.

14. A method of applying glaze to a ceramic article characterised in that a method is used according to any of the preceding Claims.

## Patentansprüche

1. Verfahren zum Auftragen einer Schicht aus einem einbrennbaren Partikelmaterial auf einen brennbaren Gegenstand, wobei das Verfahren umfaßt:
Auftragen des Partikelmaterials und eines haftenden Materials durch Besprühen des Gegenstands durch Trockenpulverauftragung, so daß das Partikelmaterial durch das haftende Material auf dem Gegenstand gehalten wird, bis ein anschließendes Brennen des Materials und des Gegenstands stattgefunden hat, wobei das haftende Material an dem Gegenstand haftet, indem es sich darauf aus einem geschmolzenen Zustand verfestigt, dadurch gekennzeichnet, daß der Gegenstand vor dem Auftragen des einbrennbaren Materials erhitzt wird, so daß das haftende Material bei Berührung mit dem erhitzten Gegenstand schmilzt und sich auf ihm während des anschließenden Abkühlens verfestigt.

2. Verfahren nach Anspruch 1, dadurch gekennzeichnet, daß das haftende Material derartig ist, daß es während des Brennens abbrennt.

3. Verfahren nach Anspruch 1 oder 2, dadurch gekennzeichnet, daß das haftende Material mit dem einbrennbaren Material vor dem Auftragen vermischt wird.

4. Verfahren nach einem der vorhergehenden Ansprüche, dadurch gekennzeichnet, daß das haftende Material ein thermoplastisches Material aufweist.

5. Verfahren nach Anspruch 4, dadurch gekennzeichnet, daß das haftende Material Polyethylen aufweist.

6. Verfahren nach einem der vorhergehenden Ansprüche, dadurch gekennzeichnet, daß das haftende Material mit dem einbrennbaren Material bei erhöhten Temperaturen vermischt wird, so daß das haftende Material während des Vermischens schmilzt.

7. Verfahren nach einem der vorhergehenden Ansprüche, dadurch gekennzeichnet, daß der spezifische Widerstand des einbrennbaren Materials vor dem Auftragen erhöht wird.

8. Verfahren nach Anspruch 7, dadurch gekennzeichnet, daß der spezifische Widerstand durch Vermischen des einbrennbaren Materials mit einem Material sehr hohen spezifischen Widerstands erhöht wird.

9. Verfahren nach Anspruch 8, dadurch gekennzeichnet, daß das Material sehr hohen spezifischen Widerstands ein flüssigaushärtbares Siloxan aufweist.

10. Verfahren nach Anspruch 8 oder 9, dadurch gekennzeichnet, daß das Material sehr hohen spezifischen Widerstands derartig ist, daß es während des Brennens abbrennt.

11. Verfahren nach Anspruch 8 oder 9, dadurch gekennzeichnet, daß das Material sehr hohen spezifischen Widerstands nach dem Brennen einen Rückstand hinterläßt.

12. Verfahren nach einem der Ansprüche 1 bis 6, dadurch gekennzeichnet, daß auf den Gegenstand eine elektrisch leitfähige Schicht vor der elektrostatischen Auftragung aufgetragen wird.

13. Verfahren nach Anspruch 12, dadurch gekennzeichnet, daß die leitfähige Schicht eine wäßrige Salzlösung aufweist.

14. Verfahren zum Auftragen einer Glasur auf einen keramischen Gegenstand, dadurch gekennzeichnet, daß ein Verfahren nach einem der vorhergehenden Ansprüche verwendet wird.

## Revendications

1. Procédé d'application d'une couche de matériau particulaire susceptible d'être cuit sur un objet susceptible d'être cuit, le procédé comprenant l'application par pulvérisation sur l'objet du matériau particulaire et d'un matériau susceptible d'adhérer, par application électrostatique de poudre sèche, de telle sorte que le matériau particulaire soit maintenu sur l'objet par le matériau susceptible d'adhérer jusqu'à ce que la cuisson ultérieure du matériau et de l'objet ait eu lieu, le matériau susceptible d'adhérer adhérant sur l'objet en se solidifiant sur lui à partir d'un état fondu, caractérisé en ce que l'objet est chauffé avant l'application du matériau susceptible d'être cuit, de telle sorte que le matériau susceptible d'adhérer fonde au contact de l'objet chauffé, et se solidifie sur lui lors du refroidissement ultérieur.

2. Procédé selon la revendication 1, caractérisé en ce que le matériau susceptible d'adhérer est d'un type qui se consume par le feu lors de la cuisson.

3. Procédé selon les revendications 1 ou 2, caractérisé en ce que le matériau susceptible d'adhérer est mélangé avec le matériau susceptible d'être cuit avant l'application.

4. Procédé selon l'une quelconque des revendications précédentes, caractérisé en ce que le matériau susceptible d'adhérer comprend un matériau thermoplastique.

5. Procédé selon la revendication 4, caractérisé en ce que le matériau susceptible d'adhérer comprend du polyéthylène.

6. Procédé selon l'une quelconque des revendications précédentes, caractérisé en ce que le matériau susceptible d'adhérer est mélangé au matériau susceptible d'être cuit à des températures élevées, de sorte que le matériau susceptible d'adhérer fonde lors du mélange.

7. Procédé selon l'une quelconque des revendications précédentes, caractérisé en ce que la résistivité volumique du matériau susceptible d'être cuit est augmentée avant l'application.

8. Procédé selon la revendication 7, caractérisé en ce que la résistivité volumique est augmentée en mélangeant le matériau susceptible d'être cuit avec un matériau présentant une résistivité élevée.

9. Procédé selon la revendication 8, caractérisé en ce que le matériau présentant une résistivité élevée comprend un siloxane durcissable liquide.

10. Procédé selon les revendications 8 ou 9, caractérisé en ce que le matériau présentant une résistivité élevée est d'un type qui se consume par le feu lors de la cuisson.

11. Procédé selon les revendications 8 ou 9, caractérisé en ce que le matériau présentant une résistivité élevée laisse un résidu après la cuisson.

12. Procédé selon l'une quelconque des revendications 1 à 6, caractérisé en ce qu'une couche conductrice d'électricité est appliquée sur l'objet avant l'application électrostatique.

13. Procédé selon la revendication 12, caractérisé en ce que la couche conductrice comprend une solution aqueuse d'un sel.

14. Procédé d'application de vernis sur un objet en céramique, caractérisé en ce qu'un procédé selon l'une quelconque des revendications précédentes est employé.
